# EUROPÄISCHE PATENTSCHRIFT

(11) **EP 2 421 726 B1**
(45) Veröffentlichungstag und Bekanntmachung des Hinweises auf die Patenterteilung: **05.03.2014**
(21) Anmeldenummer: 10719740.2
(22) Anmeldetag: 19.04.2010
(51) Int. Cl.: B60R 21/217

(54) **GASSACKMODUL FÜR EIN FAHRZEUGINSASSEN-RÜCKHALTESYSTEM UND VERFAHREN ZU DESSEN HERSTELLUNG**
AIRBAG MODULE FOR A VEHICLE OCCUPANT RESTRAINT SYSTEM AND METHOD FOR THE PRODUCTION THEREOF
MODULE DE SAC GONFLABLE POUR UN SYSTÈME DE RETENUE DE PASSAGERS D'UN VÉHICULE ET PROCÉDÉ DE FABRICATION ASSOCIÉ

(30) Priorität: 20.04.2009 DE 102009018168
(43) Veröffentlichungstag der Anmeldung: 29.02.2012
(73) Patentinhaber: Takata AG, 63743 Aschaffenburg (DE)
(72) Erfinder: WEIGAND, Steffen, 63739 Aschaffenburg (DE)
(74) Vertreter: Staroske, Sandro
(86) Internationale Anmeldenummer: PCT/EP2010/055101
(87) Internationale Veröffentlichungsnummer: WO 2010/121985

(56) Entgegenhaltungen:
- EP-A1- 1 923 276
- DE-A1- 10 216 217
- DE-A1-102006 045 245
- US-A- 5 791 682

## Beschreibung

Die Erfindung betrifft ein Gassackmodul für ein Fahrzeuginsassen-Rückhaltesystem gemäß dem Oberbegriff des Anspruchs 1 und ein Verfahren zur Herstellung eines solchen Gassackmoduls.

Aus der Druckschrift EP 1 737 708 B1 ist ein Gassackmodul für ein Fahrzeuginsassen-Rückhaltesystem bekannt, das einen Gassack, einen in dem Gassack angeordneten Rohrgasgenerator und einen Gasgeneratorträger aufweist. Der Gasgeneratorträger dient dabei der Befestigung und Halterung des Rohrgasgenerators. Zur Befestigung des Rohrgasgenerators sind am Rohrgasgenerator Bolzen vorgesehen, die sich radial von diesem weg erstrecken und aus dem Gassack herausragen, so dass der Gasgenerator zusammen mit dem Gassack an dem Gasgeneratorträger angeschraubt werden kann.

Aus der Druckschrift EP 0 680 851 A1 ist ein Gassackmodul eines Fahrzeuginsassen-Rückhaltesystems bekannt, das eine Befestigung eines Gasgenerators an einem Gasgeneratorgehäuse durch eine elastische Klemmaufnahme vorsieht.

Aus den Druckschriften US 5 791 682 A und DE 44 41 187 A1 sind Gassackmodule bekannt, bei denen ein Gassack im Auslösefall einen Gasgenerator an einen Gasgeneratorträger zieht. Darüber hinaus offenbart die DE 102 16 217 A1 ein Gassackmodul mit einem Gassack, der durch eine Öffnung in einem Gasgeneratorträger greift und auf der dem aufblasbaren Abschnitt des Gassacks abgewandten Seite des Gasgeneratorträgers mit einem Halteelement verbunden ist, das zur Fixierung des Gassacks mit dem Gasgeneratorträger zusammenwirkt.

Der vorliegenden Erfindung liegt die Aufgabe zugrunde, ein Gassackmodul für ein Fahrzeuginsassen-Rückhaltesystem bereitzustellen, das in einfacher Weise herstellbar ist. Des Weiteren soll ein Verfahren zur Herstellung eines solchen Gassackmoduls bereitgestellt werden.

Diese Aufgabe wird erfindungsgemäß durch ein Gassackmodul mit den Merkmalen des Anspruchs 1 und ein Verfahren mit den Merkmalen des Anspruchs 12 gelöst. Ausgestaltungen der Erfindung sind in den Unteransprüchen angegeben.

Danach ist vorgesehen, dass der Gasgenerator derart in Bezug auf den Gasgeneratorträger angeordnet ist, dass im Auslösefall der Gassack den Gasgenerator an den Gasgeneratorträger zieht. Die Befestigung ist also derart, dass im Auslösefall der Gassack, der mit Gas befüllt wird, einen Zug auf den Gasgenerator ausübt und diesen dadurch an den Gasgeneratorträger presst. Aufgrund dieser Funktionsweise ist es nicht erforderlich, den Gasgenerator mit dem Gasgeneratorträger zu verschrauben. Vielmehr ist es ausreichend, den Gasgenerator beispielsweise mittels Verrastung am Gasgeneratorträger zu befestigen. Die Notwendigkeit, Bolzen am Gasgenerator vorzusehen und mit dem Gasgeneratorträger zu verschrauben, entfällt somit.

Erfindungsgemäß ist weiter vorgesehen, dass der Gasgeneratorträger eine Öffnung aufweist, durch die der nicht aufgeblasene Gassack teilweise gezogen ist. Dadurch ist ein erster Bereich des Gassacks definiert, der den Gasgenerator nicht umfasst und der sich auf der einen Seite dieser Öffnung befindet. Ein zweiter Bereich des Gassacks, der den Gasgenerator umfasst, befindet sich dagegen auf der anderen Seite der Öffnung. Der erste Bereich des Gassacks, der den Gasgenerator nicht umfasst, kann dabei zu einem Gassackpaket gefaltet sein. Die Öffnung ist derart bemessen, dass der Gasgenerator nicht durch die Öffnung gezogen werden kann, so dass im Auslösefall, wenn der zweite Bereich des Gassacks mit Gas befüllt wird, der Gassack den Gasgenerator an den Gasgeneratorträger zieht.

Die erfindungsgemäße Lösung ist einfach, da sie mit den bisher erforderlichen Bolzen Bauteile einspart. Sie erlaubt darüber hinaus eine einfache Herstellung und Montage eines Gassackmoduls, da das Erfordernis eines Verschraubens des Gasgenerators mit dem Gasgeneratorträger entfällt. Die Montage kann damit in wenigen Arbeitsschritten ohne die Notwendigkeit von Schraubverbindungen erfolgen.

In einer Ausgestaltung der Erfindung ist dabei vorgesehen, dass der Gassack und die Gasgeneratoröffnung derart ausgebildet und angeordnet sind, dass im Auslösefall, wenn der Gassack den Gasgenerator gegen den Gasgeneratorträger zieht, dabei die Gasgeneratoröffnung des Gassacks zumindest teilweise verschlossen und damit der Gassack zumindest näherungsweise gasdicht abgedichtet wird. Hierzu kann beispielsweise vorgesehen sein, dass ein an die Gasgeneratoröffnung angrenzender Gassackabschnitt zumindest teilweise zwischen dem Gasgenerator und Gasgeneratorträger verläuft, so dass er im Auslösefall, bei Pressen des Gasgenerators gegen den Gasgeneratorträger, zwischen diesen gasdicht eingeklemmt wird. Damit wird erreicht, dass die Gasgeneratoröffnung zum Einführen des Gasgenerators in den Gassack ohne weitere Zusatzmittel im entscheidenden Augenblick, d.h. bei Auslösen des Gassacks, zumindest näherungsweise gasdicht verschlossen wird, so dass über diese Öffnung kein oder nur reduziert Gas aus dem Gassack entweichen kann.

Dabei kann in einer Ausführungsform vorgesehen sein, dass ein Ende des Gasgenerators aus dem Gassack herausragt, so dass dieses Ende in einfacher Weise mit einem elektrischen Anschlusskabel verbunden sein kann.

Die Öffnung im Gasgeneratorträger ist beispielsweise als Schlitz ausgebildet. Es können jedoch auch beliebige andere Formen zur Ausbildung der Öffnung vorgesehen sein. Auch ist es denkbar, dass die Öffnung durch eine randseitige Aussparung oder Einbuchtung des Generatorträgers gebildet ist.

Es wird darauf hingewiesen, dass ein Gasgeneratorträger im Sinne der vorliegenden Erfindung jede Struktur ist, die der Halterung eines Gasgenerators dient. Dabei sind zahlreiche Ausgestaltungen möglich. Beispielsweise handelt es sich um ein Bauteil, das der Befestigung des Gassackmoduls an einer Fahrzeugstruktur wie beispielsweise dem Sitzrahmen eines Fahrzeugsitzes oder einem tragenden Element der Fahrzeugkarosserie dient. Dabei kann vorgesehen sein, dass der Gasgeneratorträger einen Teil des Gehäuses des Gassackmoduls ausbildet oder zusammen mit weiteren Elementen, wie z. B. einer Abdeckkappe, das Modulgehäuse bildet.

Wie bereits erwähnt, ist der Gasgenerator in einer Ausgestaltung der Erfindung an dem Gasgeneratorträger verrastet. Sofern es sich bei dem Gasgenerator um einen Rohrgasgenerator handelt, was in einer Ausgestaltung der Fall ist, erfolgt das Verrasten beispielsweise mittels Rastarmen des Generatorträgers, die den Rohrgasgenerator zumindest teilweise umfangsseitig umfassen. Eine Befestigung des Gasgenerators an dem Gasgeneratorträger kann dabei jedoch auch in anderer Weise, beispielsweise mittels eines Klebebandes erfolgen. Dabei braucht keine Befestigung vorgesehen werden, großen Kräften standhalten müsste, da aufgrund der erfindungsgemäßen Funktionalität der Gassack im Auslösefall den Gasgenerator an den Gasgeneratorträger zieht und damit im Auslösefall die vorhandene Befestigung zwischen Gasgenerator und Gasgeneratorträger gesichert wird. Insbesondere kann daher auf eine Schraubverbindung zwischen dem Gasgenerator und dem Gasgeneratorträger verzichtet werden.

In einer weiteren Ausgestaltung der Erfindung weist der Gasgeneratorträger eine erste Seite (z.B. Oberseite) und eine zweite Seite (z.B. Unterseite) auf. Er ist dabei in einer Ausgestaltung abgesehen von einem Aufnahmebereich zur Halterung des Gasgenerators und einer Öffnung zur Durchführung des Gassacks im Wesentlichen eben ausgebildet. Der Bereich des Gassacks, der den Gasgenerator nicht umfasst, ist auf der einen Seite des Gasgeneratorträgers angeordnet, während der Gasgenerator an der anderen Seite des Gasgeneratorträgers an diesem verrastet ist. Dabei kann vorgesehen sein, dass der Gasgenerator ausschließlich und vollständig auf der anderen Seite des Gasgeneratorträgers angeordnet und an diesem verrastet oder in anderer Weise an diesem befestigt ist.

In einer weiteren Ausgestaltung der Erfindung ist vorgesehen, dass das Gassackmodul des Weiteren eine Abdeckung aufweist, die den gefalteten Gassack umfasst. Die Abdeckung ist dabei in einer Ausgestaltung mit dem Gasgeneratorträger verrastbar. Dies ermöglicht eine einfache Verbindung zwischen der Abdeckung und dem Gasgeneratorträger. Die Abdeckung und der Gasgeneratorträger bilden dabei das Modulgehäuse des Gassackmoduls.

Die Erfindung betrifft auch ein Verfahren zur Herstellung eines Gassackmoduls, das die folgenden Schritte umfasst:
- Bereitstellen eines Gassacks, der eine Gasgeneratoröffnung zum Einführen eines Gasgenerators in den Gassack aufweist, sowie eines Gasgenerators und eines Gasgeneratorträgers,
- Einführen des Gasgenerators in die Gasgeneratoröffnung, und
- Anordnen des Gasgenerators in Bezug auf den Gasgeneratorträger derart, dass im Auslösefall der Gassack den Gasgenerator an den Gasgeneratorträger drückt,
- wobei der nicht aufgeblasene Gassack derart durch eine Öffnung des Gasgeneratorträgers gezogen wird, dass ein erster Bereich des Gassacks, der den Gasgenerator nicht umfasst, sich auf der einen Seite der Öffnung befindet und ein zweiter Bereich des Gassacks, der den Gasgenerator umfasst, sich auf der anderen Seite der Öffnung befindet.

Der Gasgenerator wird dabei derart angeordnet, dass aus dem Gasgenerator austretendes Gas zumindest hauptsächlich den ersten Bereich des Gassacks befüllt, so dass dieser aufgeblasen und dadurch der Gasgenerator an den Gasgeneratorträger gezogen wird.

Weiter ist in einer Ausführungsbeispiel vorgesehen, dass im Auslösefall der Gassack den Gasgenerator derart gegen den Gasgeneratorträger zieht, dass die Gasgeneratoröffnung gasdicht verschlossen wird. Hierzu ist beispielsweise vorgesehen, dass ein an die Gasgeneratoröffnung angrenzender Abschnitt des Gassacks zumindest teilweise zwischen dem Gasgenerator und dem Gasgeneratorträger positioniert wird, so dass dieser Abschnitt im Auslösefall, bei Pressen des Gasgenerators gegen den Gasgeneratorträger, zwischen dem Gasgenerator und dem Gasgeneratorträger gasdicht eingeklemmt wird, wodurch die Gasgeneratoröffnung zumindest teilweise verschlossen wird.

Die Erfindung wird nachfolgend unter Bezugnahme auf die Figuren der Zeichnung anhand mehrerer Ausführungsbeispiele näher erläutert. Es zeigen:
- Figur 1: schematisch einen Gassack mit einer Gasgeneratoröffnung und einen Gasgenerator;
- Figur 2: schematisch den Gassack und den Gasgenerator der Figur 1 zusammen mit einem Gasgeneratorträger, wobei der Gasgenerator in den Gassack eingeführt und der Gassack teilweise durch eine Öffnung des Gasgeneratorträgers gezogen ist;
- Figur 3: die fertig montierte Anordnung der Figur 2 zusammen mit einer Generatorabdeckung;
- Figur 4: ein Ausführungsbeispiel eines Gassackmoduls mit einem Gasgenerator, einem Gasgeneratorträger und einer Abdeckkappe, wobei der Gassack nicht dargestellt ist;
- Figur 5: schematisch den Gasgenerator und den Gasgeneratorträger der Figur 4 zusammen mit einem Gassack, in den der Gasgenerator eingeführt ist und der teilweise durch eine Öffnung des Gasgeneratorträgers geführt ist, und
- Figur 6: das zusammengebaute Gassackmodul der Figur 4, wobei wiederum der Gassack nicht dargestellt ist.

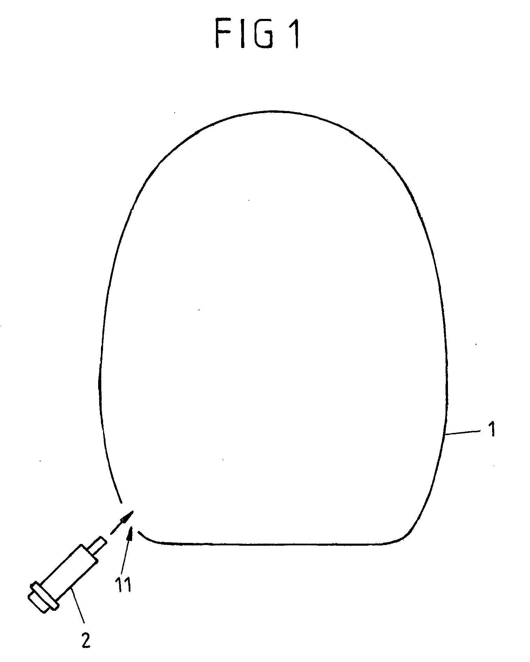

Die Figur 1 zeigt schematisch einen Gassack 1, bei dem es sich um einen beliebigen Gassack eines Fahrzeuginsassen-Rückhaltesystems handeln kann. Beispielsweise handelt es sich um einen Gassack, der zwei Gassacklagen aufweist, die an ihrem Randbereich zusammengenäht sind. Der Gassack 1 kann jedoch auch eine andere Anzahl von Lagen aufweisen und/oder in anderer Weise ausgebildet sein.

Des Weiteren ist ein Gasgenerator 2 dargestellt, bei dem es sich im dargestellten schematischen Beispiel um einen Rohrgasgenerator handelt. Der Gasgenerator kann jedoch auch in anderer Weise als als Rohrgasgenerator ausgebildet sein.

In dem Gassack 1 befindet sich eine Gasgeneratoröffnung 11, die zum Einführen des Gasgenerators 2 in den Gassack 1 dient. Die Gasgeneratoröffnung 11 ist beispielsweise kreisförmig oder mehreckig ausgebildet, in Abhängigkeit von der Herstellungsart und/oder der Form des Gasgenerators 2, der in die Gasgeneratoröffnung 11 eingeführt wird. Sie wird beispielsweise durch einer Unterbrechung einer Umfangsnaht des Gassacks 1 gebildet, wobei jedoch auch anderen Ausgestaltungen möglich sind.

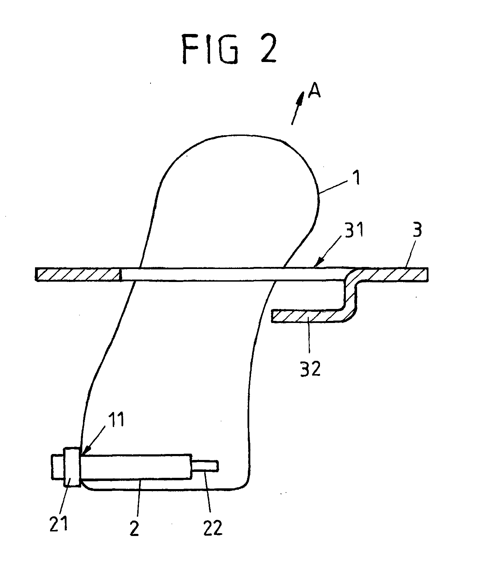

Die Figur 2 zeigt den in die Gasgeneratoröffnung 11 des Gassacks 1 eingeführten Gasgenerator 2 sowie in Schnittdarstellung einen Gasgeneratorträger 3, der eine Öffnung 31 aufweist. Die Öffnung 31 ist beispielsweise als Schlitz ausgebildet. Es können aber auch andere Formen vorgesehen sein, wobei es lediglich darauf ankommt, dass die Öffnung 31 so bemessen ist, dass der Gasgenerator 2 nicht durch die Öffnung 31 hindurch gezogen werden kann. Auch ist es grundsätzlich denkbar, dass die Öffnung in einem Randbereich des Generatorträgers 3, beispielsweise in Form einer Einbuchtung ausgebildet ist.

Der Figur 2 ist zu entnehmen, dass der Gasgenerator 2 nicht vollständig in den Gassack 1 eingeführt ist, vielmehr das eine Ende 21 des Gasgenerators aus dem Gassack herausragt. Das andere Ende 22 des Gasgenerators 2, aus dem bei Zündung des Gasgenerators in an sich bekannter Weise Gas abströmt, befindet sich dagegen innerhalb des Gasgenerators 1.

Durch Anordnung des Gasgenerators 2 im Gassack 1 derart, dass der Gasgenerator 2 nur teilweise innerhalb des Gassackes 1 angeordnet ist und ein Ende 21 des Gasgenerators aus dem Gassack herausragt, kann in einfacher Weise ein elektrischer Anschluss des Gasgenerators 2 realisiert werden. Beispielsweise ist das herausragende Ende 21 mit einem elektrischen Anschluss in Form eines Gerätesteckers und eines Anschlusskabels ausgebildet (nicht dargestellt).

Es liegt jedoch ebenfalls im Rahmen der Erfindung, dass der Gasgenerator 2 vollständig in den Gassack 1 eingeführt ist.

Der in dem Gassack 1 angeordnete Gasgenerator 2 wird nun derart am Gasgeneratorträger 3 befestigt, dass zunächst der nicht aufgeblasene Gassack 1 durch die Öffnung 31 des Gasgenerators 3 geführt wird, entsprechend der Richtung des Pfeils A der Figur 2. Der Gassack 1 wird dabei so weit durch die Öffnung 31 gezogen, bis der Gasgenerator 2 an der Unterseite des Generatorträgers 3 zur Anlage kommt.

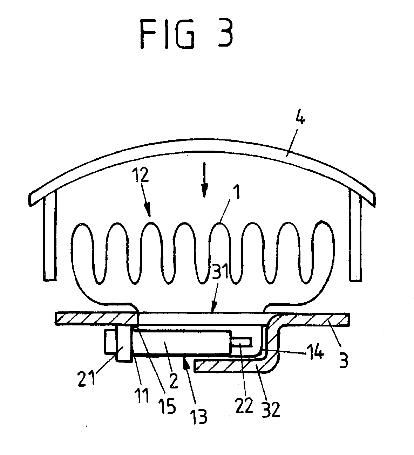

Die Figur 3 zeigt das fertig montierte Modul. Der Gasgenerator 1 ist an der Unterseite des Gasgeneratorträgers 3 angeordnet, wobei ein abgewinkelter Bereich 32 des Gasgeneratorträgers 3 der Aufnahme und Lagerung des einen Endes des Gasgenerators 2 dient. Zusätzlich sind nicht dargestellte Klemmelemente vorgesehen sein, die das aus dem Gassack herausragende Ende 21 des Gasgenerators 2 federnd umgreifen.

Im fertig montierten Zustand der Figur 3 ist der Gassack 1 im Wesentlichen durch die Öffnung 31 des Gasgeneratorträgers 3 hindurch durchgezogen. Dementsprechend bildet der Gassack 1 auf der einen Seite der Öffnung 31 einen ersten Bereich 12 aus. In diesem Bereich 12 ist der Gassack 1 zu einem Gassackpaket gefaltet, wie in der Figur 3 schematisch dargestellt ist. Die Art der Faltung kann dabei beliebig sein.

Ein zweiter Bereich 13, der die Gasgeneratoröffnung 11 umfasst, befindet sich an der anderen Seite der Öffnung 31. Dieser Bereich 13 umfasst mindestens einen Gassackabschnitt 14, der um den Bereich des Gasgenerators 2, der sich innerhalb des Gassacks 1 befindet, herumgeführt ist.

Weiter wird darauf hingewiesen, dass der Bereich 13 einen Gassackabschnitt 15 umfasst, der an die Gasgeneratoröffnung 11 angrenzt und sich dabei zwischen der Wandung des Gasgenerators 2 und dem Gasgeneratorträger 3 befindet.

Das Modul weist des Weiteren eine schematisch dargestellte Abdeckkappe 4 auf, die auf das gefaltete Gassackpaket 1 aufgesetzt wird und beispielsweise über Rastverbindungen mit dem Generatorträger 3 verbunden wird. Die Abdeckkappe 4 weist dabei eine nicht dargestellte Aufreißlinie auf.

Im Falle der Auslösung des Gasgenerators 2 strömt Gas aus dem einen Ende 22 des Gasgenerators 2 in den Gassack 1. Dieses Ende 22 des Gasgenerators 2 weist dabei Ausströmöffnungen (nicht dargestellt) auf, von denen das ausströmende Gas direkt und/oder nach Umlenkung an dem abgewinkelten Bereich 32 des Gasgeneratorträgers 3 durch die Öffnung 31 im Gasgeneratorträger 3 in den oberen Bereich 12 des Gassacks 1 strömt. Dieser Bereich 12 bläst sich daraufhin auf, wobei in an sich bekannter Weise die Abdeckkappe 4 aufreißt, so dass der Gassack 1 aus dem Gassackmodul austreten kann.

Da der untere Bereich 13 des Gassacks 3 den Gasgenerator 2 umschließt, führt dieser Aufblasvorgang des Gassacks 1 dazu, dass der Gassack 1, und zwar dessen den Gasgenerator 2 umschließender Gassackabschnitt 14, den Gasgenerator 2 an den Gasgeneratorträger 3 zieht. Der Gasgenerator 2 wird somit gegen den Gasgeneratorträger 3 gepresst.

Dies führt zu zwei Effekten. Zum einen wird der Gasgenerator 2 am Generatorträger 3 gesichert, so dass davon abgesehen werden kann, den Gasgenerator 2 und den Generatorträger 3 über Schraubverbindungen miteinander zu verbinden. Vielmehr ist es ausreichend, den Gasgenerator beispielsweise über die erwähnten Klemmverbindungen derart am Generatorträger zu befestigen, dass der Generatorträger davor gesichert ist, bei einem Transport oder beim Betrieb eines Kraftfahrzeugs sich vom Generatorträger 3 zu lösen.

Zum anderen wird bei Befüllen des Gassacks 1 mit Gas automatisch durch das Pressen des Gasgenerators 2 gegen den Generatorträger 3 der Gassack 1 im Bereich der Gasgeneratoröffnung 11 abgedichtet. So wird der Gassackabschnitt 15, der sich zwischen dem Gasgenerator 2 und dem Gasgeneratorträger 3 befindet, zwischen diesen gasdicht eingeklemmt. Die Öffnung 11 im Gassack 1 ist damit in dem dem Generatorträger 3 zugewandten Bereich abgedichtet, so dass in den Gassack eintretendes Gas nicht oder nur reduziert über die Gasgeneratoröffnung 11 abströmen kann. Eine Abdichtwirkung wird darüber hinaus auch in dem Bereich der Gasgeneratoröffnung 11 erzielt, die dem Generatorträger 3 abgewandt ist. So wird der Gassackabschnitt 14 angrenzend an diesen Bereich der Gasgeneratoröffnung 11 gegen den Gasgenerator 2 gepresst, so dass auch in diesem Bereich kein oder nur so wenig Gas aus der Öffnung 11 austreten kann.

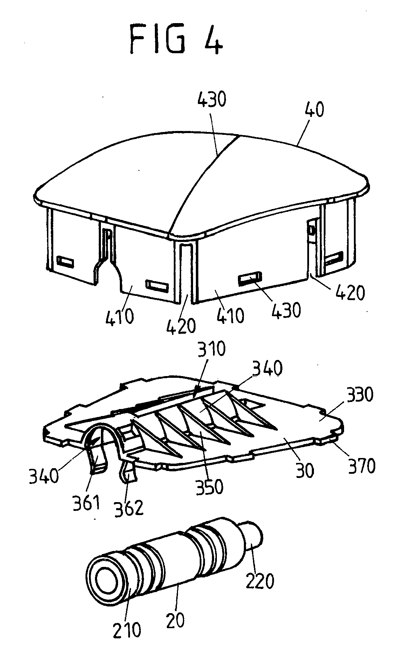

Die Figur 4 zeigt ein Ausführungsbeispiel eines Gassackmoduls, das entsprechend der prinzipiellen Ausgestaltung der Figuren 1 bis 3 ausgebildet ist. Der Gassack selbst ist in der Darstellung der Figur 4 der Übersichtlichkeit halber nicht dargestellt.

Das Gassackmodul umfasst einen Rohrgasgenerator 20, einen Gasgeneratorträger 30 und eine Abdeckkappe 40. Der Gasgenerator 20 weist ein erstes Ende 210 und ein zweites Ende 220 mit Gasausströmöffnungen (nicht dargestellt) auf. Der Generatorträger 30 besteht aus einer Grundplatte 330, in der ein im Wesentlichen zylinderförmiger Aufnahmebereich 340 zur Aufnahme des Gasgenerators 20 ausgebildet ist. Dabei sind an der Unterseite der Grundplatte 330 zwei Klemmarme 361, 362 vorgesehen, über die der Gasgenerator 20 am Generatorträger 30 verrastet werden kann. Der Aufnahmebereich 340 ist durch Verstärkungsstreben 350 strukturell verstärkt.

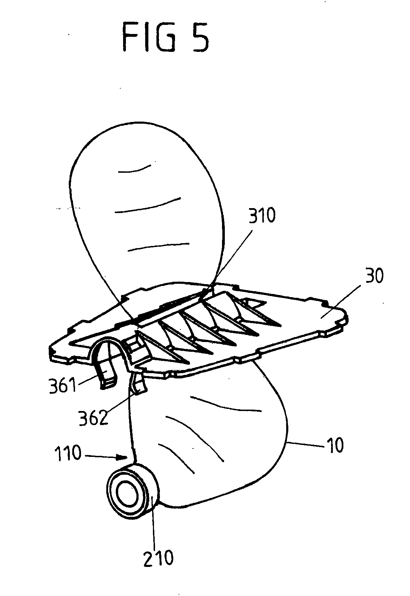

Auf der Oberseite der Grundplatte 330 bildet der Aufnahmebereich 340 einen Längsschlitz 310 im Generatorträger 30 aus, durch den entsprechend der Figur 2 der Gassack bei der Montage gezogen wird, vgl. hierzu auch die noch folgenden Ausführungen zu der Figur 5. Der Generatorträger 30 weist des Weiteren Vorsprünge 370 auf, die der Befestigung der Abdeckkappe 40 dienen.

Die Abdeckkappe 40 weist mehrere Seitenwände 410 auf, die durch Spalte 420 getrennt sind, so dass die Seitenwände 410 jeweils flexibel ausgebildet sind. Die Seitenwände 410 weisen Aussparungen 430 auf, die mit den Vorsprüngen 370 des Generatorträgers 30 korrespondieren und eine rastende Verbindung zwischen der Abdeckkappe 40 und dem Generatorträger 30 ermöglichen. Die Abdeckkappe 40 weist des Weiteren eine Aufreißlinie 430 auf.

Die Figur 5 zeigt schematisch die Montage des in der Figur 4 nicht dargestellten Gassacks. Vor oder nach Einführen des Gasgenerators 20 in eine Gasgeneratoröffnung 110 des Gassacks 10 wird der Gassack 10 durch den Spalt 310 des Generatorträgers 30 gezogen. Entsprechend der Figur 2 erfolgt dies solange, bis der Gasgenerator 20 an den Generatorträger 30 gezogen und über die Klemmarme 361, 362 an diesem verrastet ist. Der Gasgenerator 20 befindet sich dabei innerhalb des Gassacks 10. Der durch den Schlitz 310 gezogene Bereich des Gassacks wird zu einem Gassackpaket gefaltet und die Anordnung mittels der Abdeckkappe 40 verschlossen.

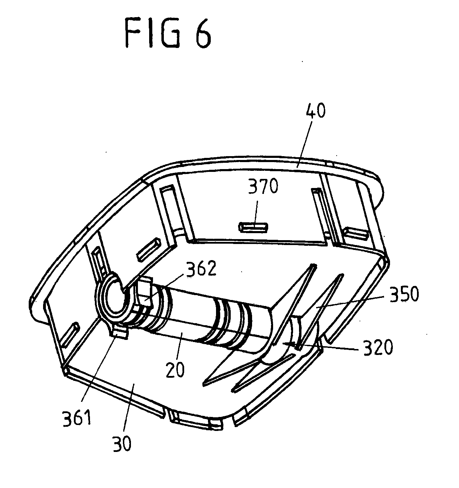

Die Figur 6 zeigt das fertig montierte Gassackmodul, wiederum ohne den Gassack, um die Anordnung des Gasgenerators 20 am Generatorträger 30 besser darstellen zu können. Der Gasgenerator 20 ist über die Klemmarme 361, 362 an der Unterseite des Generatorträgers 30 festgeklemmt. Der Gasaustrittsbereich des Gasgenerators 20 ist in einem Bereich 320 des Generatorträgers 30 angeordnet, der das eine Ende 220 des Gasgenerators 20 zusätzlich abstützt und darüber hinaus aus dem Gasgenerator 20 austretendes Gas in Richtung der Oberseite des Generatorträgers 30 lenkt. Dieser Aufnahmebereich 320 ist ebenfalls durch Verstärkungsstreben 350 strukturell verstärkt.

Die Abdeckkappe 40 ist über die Rastverbindungen 370, 430 mit dem Generatorträger 30 verrastet, wobei der Generatorträger 30 und die Abdeckkappe 40 das Gehäuse des Gassackmoduls bilden. Der Gassack befindet sich größtenteils gefaltet zwischen dem Generatorträger 30 und der Abdeckkappe 40. Zumindest eine Gewebelage des Gassacks erstreckt sich jedoch durch die Öffnung 310 des Generatorträgers 30 und um den Gasgenerator 20 herum, so dass im Auslösefall der Gassack den Gasgenerator 20 an den Gasgeneratorträger 30 zieht.

Die Erfindung beschränkt sich in ihrer Ausgestaltung nicht auf die vorstehend dargestellten Ausführungsbeispiele, die lediglich beispielhaft zu verstehen sind. Beispielsweise können der Gasgenerator, der Generatorträger und der Gassack eine abweichende Form als beschrieben aufweisen. Auch wird darauf hingewiesen, dass die in den Figuren 3, 4 und 6 dargestellte Abdeckkappe 4, 40 lediglich optional ist. Ebenso kann der Gassack beispielsweise durch eine flexible Hülle oder eine Gassackfalte gegenüber angrenzenden Komponenten geschützt sein.

## Patentansprüche

1. Gassackmodul für ein Fahrzeuginsassen-Rückhaltesystem, das aufweist:
- einen Gassack (1, 10), der eine Gasgeneratoröffnung (11, 110) zum Einführen eines Gasgenerators (2, 20) in den Gassack aufweist,
- einen in die Gasgeneratoröffnung (11, 110) eingeführten und zumindest teilweise in dem Gassack (1, 10) angeordneten Gasgenerator (2, 20), der im Auslösefall Gas in den Gassack (1, 10) einbläst, und
- einen Gasgeneratorträger (3, 30), an dem der Gasgenerator (2, 20) befestigt ist,
**dadurch gekennzeichnet, dass**
- der Gasgenerator (2, 20) derart in Bezug auf den Gasgeneratorträger (3, 30) angeordnet ist, dass im Auslösefall der Gassack (1, 10) den Gasgenerator (2, 20) an den Gasgeneratorträger (3, 30) zieht,
- wobei der Gasgeneratorträger (3, 30) eine Öffnung (31, 310) aufweist, durch die der nicht aufgeblasene Gassack (1, 10) derart gezogen ist, dass ein erster Bereich (12) des Gassacks, der den Gasgenerator (2, 20) nicht umfasst, sich auf der einen Seite der Öffnung (31, 310) befindet und ein zweiter Bereich (13) des Gassacks, der den Gasgenerator (2, 20) umfasst, sich auf der anderen Seite der Öffnung befindet, und die Öffnung derart bemessen ist, dass der Gasgenerator (2, 20) nicht durch die Öffnung (31, 310) gezogen werden kann,
- und wobei der Gasgenerator (2, 20) derart angeordnet ist, dass aus dem Gasgenerator (2, 20) austretendes Gas zumindest hauptsächlich den ersten Bereich (12) des Gassacks (1, 10) befüllt, so dass dieser aufgeblasen und dadurch der Gasgenerator (2, 20) an den Gasgeneratorträger (3, 30) gezogen wird.

2. Gassackmodul nach Anspruch 1, **dadurch gekennzeichnet, dass** die Öffnung (31, 310) als Schlitz ausgebildet ist.

3. Gassackmodul nach Anspruch 1 oder 2, **dadurch gekennzeichnet, dass** der erste Bereich (12) des Gassacks (1, 10), der den Gasgenerator (2, 20) nicht umfasst, zu einem Gassackpaket gefaltet ist.

4. Gassackmodul nach einem der vorangehenden Ansprüche, **dadurch gekennzeichnet, dass** der Gasgenerator (2, 20) an dem Gasgeneratorträger (3, 30) verrastet ist.

5. Gassackmodul nach Anspruch 4, **dadurch gekennzeichnet, dass** der Gasgeneratorträger (3, 30) eine erste und eine zweite Seite aufweist, der erste Bereich (12) des Gassacks (1, 10), der den Gasgenerator (2, 20) nicht umfasst, auf der ersten Seite des Gasgeneratorträgers (3, 30) angeordnet und der Gasgenerator (2, 20) an der zweiten Seite des Gasgeneratorträgers (3, 30) an diesem verrastet ist.

6. Gassackmodul nach einem der vorangehenden Ansprüche, **dadurch gekennzeichnet, dass** der Gasgenerator (2, 20) als Rohrgasgenerator ausgebildet ist.

7. Gassackmodul nach Anspruch 6, soweit zurückbezogen auf Anspruch 4, **dadurch gekennzeichnet, dass** der Rohrgasgenerator (2, 20) mittels Rastarmen (361, 362), die den Rohrgasgenerator (2, 20) zumindest teilweise umfangsseitig umfassen, am Gasgeneratorträger (3, 30) verrastet ist.

8. Gassackmodul nach einem der vorangehenden Ansprüche, **dadurch gekennzeichnet, dass** das Gassackmodul des Weiteren eine Abdeckung (4, 40) aufweist, die den gefalteten Gassack (1, 10) umfasst, wobei die Abdeckung (4, 40) mit dem Gasgeneratorträger (3, 30) verrastbar ist.

9. Gassackmodul nach einem der vorangehenden Ansprüche, **dadurch gekennzeichnet, dass** der Gassack (1, 10) und die Gasgeneratoröffnung (11, 110) derart ausgebildet und angeordnet sind, dass im Auslösefall durch das Pressen des Gasgenerators (2, 20) gegen den Gasgeneratorträger (3, 30) die Gasgeneratoröffnung (11, 110) gasdicht verschlossen wird.

10. Gassackmodul nach Anspruch 9, **dadurch gekennzeichnet**, der ein an die Gasgeneratoröffnung (11, 110) angrenzender Abschnitt (15) des Gassacks (1, 10) zumindest teilweise zwischen dem Gasgenerator (2, 20) und dem Gasgeneratorträger (3, 30) verläuft, so dass dieser Abschnitt (15) im Auslösefall, bei Pressen des Gasgenerators (2, 20) gegen den Gasgeneratorträger (3, 30), zwischen dem Gasgenerator (2, 20) und dem Gasgeneratorträger (3, 30) gasdicht eingeklemmt wird.

11. Gassackmodul nach einem der vorangehenden Ansprüche, **dadurch gekennzeichnet, dass** der Gasgeneratorträger (3, 30) eine erste und eine zweite Seite aufweist, der erste Bereich (12) des Gassacks (1, 10), der den Gasgenerator (2, 20) nicht umfasst, auf der ersten Seite des Gasgeneratorträgers (3, 30) angeordnet und der Gasgenerator (2, 20) vollständig auf der zweiten Seite des Gasgeneratorträgers (3, 30) angeordnet ist.

12. Verfahren zur Herstellung eines Gassackmoduls eines Fahrzeuginsassen-Rückhaltesystems mit den folgenden Schritten:
- Bereitstellen eines Gassacks (1, 10), der eine Gasgeneratoröffnung (11, 110) zum Einführen eines Gasgenerators (2, 20) in den Gassack aufweist, eines Gasgenerators (2, 20) und eines Gasgeneratorträgers (3, 30),
- Einführen des Gasgenerators (2, 20) in die Gasgeneratoröffnung (11, 110), und
- Anordnen des Gasgenerators (2, 20) in Bezug auf den Gasgeneratorträger (3, 30) derart, dass im Auslösefall der Gassack (1, 10) den Gasgenerator (2, 20) an den Gasgeneratorträger (3, 30) drückt, wobei
- der nicht aufgeblasene Gassack (1, 10) derart durch eine Öffnung (31, 310) des Gasgeneratorträgers (3, 30) gezogen wird, dass ein erster Bereich (12) des Gassacks (1, 10), der den Gasgenerator (2, 20) nicht umfasst, sich auf der einen Seite der Öffnung (31, 310) befindet und ein zweiter Bereich (13) des Gassacks (1, 10), der den Gasgenerator (2, 20) umfasst, sich auf der anderen Seite der Öffnung (31, 310) befindet.

13. Verfahren nach Anspruch 12, **dadurch gekennzeichnet, dass** der Gasgenerator (2, 20) derart ausgebildet und angeordnet wird, dass aus dem Gasgenerator (2, 20) austretenden Gas zumindest hauptsächlich den ersten Bereich des Gassacks (1, 10) befüllt.

14. Verfahren nach Anspruch 12 oder 13, **dadurch gekennzeichnet, dass** der Gassack (1, 10) derart in Bezug auf den Gasgenerator (2, 20) und den Gasgeneratorträgers (3, 30) angeordnet wird, dass im Auslösefall durch das Ziehen des Gasgenerators (2, 20) an den Gasgeneratorträger (3, 30) die Gasgeneratoröffnung (11, 110) gasdicht verschlossen wird.

## Claims

1. An airbag module for a vehicle occupant restraint system, comprising:
- an airbag (1, 10) which includes a gas generator opening (11, 110) for introducing a gas generator (2, 20) into the airbag,
- a gas generator (2, 20) introduced into the gas generator opening (11, 110) and at least partly arranged in the airbag (1, 10), which in case of activation blows gas into the airbag (1, 10), and
- a gas generator support (3, 30) on which the gas generator (2, 20) is fixed,
**characterized in that**
- the gas generator (2, 20) is arranged with respect to the gas generator support (3, 30) such that in case of activation the airbag (1, 10) pulls the gas generator (2, 20) onto the gas generator support (3, 30),
- whereinthe gas generator support (3, 30) has an opening (31, 310) through which the non-inflated airbag (1, 10) is pulled such that a first region (12) of the airbag, which does not surround the gas generator (2, 20), is located on the one side of the opening (31, 310) and a second region (13) of the airbag, which surrounds the gas generator (2, 20), is located on the other side of the opening, and the opening is dimensioned such that the gas generator (2, 20) cannot be pulled through the opening (31, 310),
- and wherein the gas generator (2, 20) is arranged such that gas emerging from the gas generator (2, 20) at least chiefly fills the first region (12) of the airbag (1, 10), so that the same is inflated and the gas generator (2, 20) thereby is pulled onto the gas generator support (3, 30).

2. The airbag module according to claim 1, **characterized in that** the opening (31, 310) is formed as slot.

3. The airbag module according to claim 1 or 2, **characterized in that** the first region (12) of the airbag (1, 10), which does not surround the gas generator (2, 20), is folded to an airbag package.

4. The airbag module according to any of the preceding claims, **characterized in that** the gas generator (2, 20) is locked into place on the gas generator support (3, 30).

5. The airbag module according to claim 4, **characterized in that** the gas generator support (3, 30) has a first side and a second side, the first region (12) of the airbag (1, 10), which does not surround the gas generator (2, 20), is arranged on the first side of the gas generator support (3, 30) and the gas generator (2, 20) is locked into place on the gas generator support (3, 30) on its second side.

6. The airbag module according to any of the preceding claims, **characterized in that** the gas generator (2, 20) is formed as tubular gas generator.

7. The airbag module according to claim 6, as far as related to claim 4, **characterized in that** the tubular gas generator (2, 20) is locked into place on the gas generator support (3, 30) by means of latching arms (361, 362) which at least partly surround the tubular gas generator (2, 20) on its circumference.

8. The airbag module according to any of the preceding claims, **characterized in that** the airbag module furthermore includes a cover (4, 40) which surrounds the folded airbag (1, 10), wherein the cover (4, 40) is latchable with the gas generator support (3, 30).

9. The airbag module according to any of the preceding claims, **characterized in that** the airbag (1, 10) and the gas generator opening (11, 110) are formed and arranged such that in case of activation the gas generator opening (11, 110) is closed in a gas-tight manner by the gas generator (2, 20) pressing against the gas generator support (3, 30).

10. The airbag module according to claim 9, **characterized in that** a portion (15) of the airbag (1, 10) adjoining the gas generator opening (11, 110) at least partly extends between the gas generator (2, 20) and the gas generator support (3, 30), so that in case of activation, when the gas generator (2, 20) presses against the gas generator support (3, 30), this portion (15) is clamped between the gas generator (2, 20) and the gas generator support (3, 30) in a gas-tight manner.

11. The airbag module according to any of the preceding claims, **characterized in that** the gas generator support (3, 30) has a first side and a second side, the first region (12) of the airbag (1, 10), which does not surround the gas generator (2, 20), is arranged on the first side of the gas generator support (3, 30) and the gas generator (2, 20) is arranged completely on the second side of the gas generator support (3, 30).

12. A method for producing an airbag module of a vehicle occupant restraint system with the following steps:
- providing an airbag (1, 10), which includes a gas generator opening (11, 110) for introducing a gas generator (2, 20) into the airbag, a gas generator (2, 20) and a gas generator support (3, 30),
- introducing the gas generator (2, 20) into the gas generator opening (11, 110), and
- arranging the gas generator (2, 20) with respect to the gas generator support (3, 30) such that in case of activation the airbag (1, 10) pushes the gas generator (2, 20) onto the gas generator support (3, 30), wherein
- the non-inflated airbag (1, 10) is pulled through an opening (31, 310) of the gas generator support (3, 30) such that a first region (12) of the airbag (1, 10), which does not surround the gas generator (2, 20), is located on the one side of the opening (31, 310) and a second region (13) of the airbag (1, 10), which surrounds the gas generator (2, 20), is located on the other side of the opening (31.310).

13. The method according to claim 12, **characterized in that** the gas generator (2, 20) is formed and arranged such that gas emerging from the gas generator (2, 20) at least chiefly fills the first region of the airbag (1, 10).

14. The method according to claim 12 or 13, **characterized in that** the airbag (1, 10) is arranged with respect to the gas generator (2, 20) and the gas generator support (3, 30) such that in case of activation the gas generator opening (11, 110) is closed in a gas-tight manner by the gas generator (2, 20) pulling onto the gas generator support (3, 30).

## Revendications

1. Module de coussin gonflable pour un système de retenue de passagers d'un véhicule qui comporte :
- un coussin gonflable (1, 10) qui présente une ouverture de générateur de gaz (11, 110) pour l'introduction d'un générateur de gaz (2, 20) dans le coussin gonflable,
- un générateur de gaz (2, 20), qui est introduit dans l'ouverture de générateur de gaz (11, 110) et disposé au moins en partie dans le coussin gonflable (1, 10), qui injecte du gaz dans le coussin gonflable (1, 10) en cas de déclenchement et
- un support de générateur de gaz (3, 30) sur lequel le générateur de gaz (2, 20) est fixé,
**caractérisé en ce que**
- le générateur de gaz (2, 20) est agencé de telle manière par rapport au support de générateur de gaz (3, 30) qu'en cas de déclenchement, le coussin gonflable (1, 10) tire le générateur de gaz (2, 20) sur le support de générateur de gaz (3, 30),
- le support de générateur de gaz (3, 30) présentant une ouverture (31, 30), par laquelle le coussin gonflable (1, 10) non gonflé est tiré de telle manière qu'une première zone (12) du coussin gonflable qui ne comporte pas le générateur de gaz (2, 20) se trouve sur l'un côté de l'ouverture (31, 310) et une seconde zone (13) du coussin gonflable qui comporte le générateur de gaz (2, 20), se trouve de l'autre côté de l'ouverture, et l'ouverture étant dimensionnée de telle manière que le générateur de gaz (2, 20) ne puisse pas être tiré à travers l'ouverture (31, 310),
- et le générateur de gaz (2, 20) étant disposé de telle manière que du gaz sortant du générateur de gaz (2, 20) remplisse au moins principalement la première zone (12) du coussin gonflable (1, 10) de sorte que celle-ci soit gonflée et ainsi que le générateur de gaz (2, 20) soit tiré sur le support de générateur de gaz (3, 30).

2. Module de coussin gonflable selon la revendication 1, **caractérisé en ce que** l'ouverture (31, 310) est réalisée comme une fente.

3. Module de coussin gonflable selon la revendication 1 ou 2, **caractérisé en ce que** la première zone (12) du coussin gonflable (1, 10) qui ne comporte pas le générateur de gaz (2, 20), est pliée en un paquet de coussin gonflable.

4. Module de coussin gonflable selon l'une quelconque des revendications précédentes, **caractérisé en ce que** le générateur de gaz (2, 20) est encliqueté sur le support de générateur de gaz (3, 30).

5. Module de coussin gonflable selon la revendication 4, **caractérisé en ce que** le support de générateur de gaz (3, 30) présente un premier et un second côté, la première zone (12) du coussin gonflable (1, 10) qui ne comporte pas le générateur de gaz (2, 20), est disposé sur le premier côté du support de générateur de gaz (3, 30) et le générateur de gaz (2, 20) est encliqueté sur le second côté du support de générateur de gaz (3, 30) sur celui-ci.

6. Module de coussin gonflable selon l'une quelconque des revendications précédentes, **caractérisé en ce que** le générateur de gaz (2, 20) est réalisé comme un générateur de gaz tubulaire.

7. Module de coussin gonflable selon la revendication 6, dans la mesure où elle se rattache à la revendication 4, **caractérisé en ce que** le générateur de gaz tubulaire (2, 20) est encliqueté sur le support de générateur de gaz (3, 30) à l'aide de bras d'encliquetage (361, 362) qui comportent au moins en partie sur la périphérie le générateur de gaz tubulaire (2, 20).

8. Module de coussin gonflable selon l'une quelconque des revendications précédentes, **caractérisé en ce que** le module de coussin gonflable présente en outre un recouvrement (4, 40) qui comporte le coussin gonflable plié (1, 10), le recouvrement (4, 40) pouvant être encliqueté avec le support de générateur de gaz (3, 30).

9. Module de coussin gonflable selon l'une quelconque des revendications précédentes, **caractérisé en ce que** le coussin gonflable (1, 10) et l'ouverture de générateur de gaz (11, 110) sont réalisés et disposés de telle manière qu'en cas de déclenchement, l'ouverture de générateur de gaz (11, 110) soit fermée de manière étanche au gaz par l'appui du générateur de gaz (2, 20) contre le support de générateur de gaz (3, 30).

10. Module de coussin gonflable selon la revendication 9, **caractérisé en ce qu'**une section (15) contigüe à l'ouverture de générateur de gaz (11, 110) du coussin gonflable (1, 10) s'étend au moins en partie entre le générateur de gaz (2, 20) et le support de générateur de gaz (3, 30) de sorte que cette section (15) soit serrée de manière étanche au gaz en cas de déclenchement lors de l'appui du générateur de gaz (2, 20) contre le support de générateur de gaz (3, 30) entre le générateur de gaz (2, 20) et le support de générateur de gaz (3, 30).

11. Module de coussin gonflable selon l'une quelconque des revendications précédentes, **caractérisé en ce que** le support de générateur de gaz (3, 30) présente un premier et un second côté, la première zone (12) du coussin gonflable (1, 10) qui ne comporte pas le générateur de gaz (2, 20) est disposée sur le premier côté du support de générateur de gaz (3, 30) et le générateur de gaz (2, 20) est entièrement disposé sur le second côté du support de générateur de gaz (3, 30).

12. Procédé de fabrication d'un module de coussin gonflable d'un système de retenue de passagers d'un véhicule avec les étapes suivantes :
- mise à disposition d'un coussin gonflable (1, 10), qui présente une ouverture de générateur de gaz (11, 110) pour l'introduction d'un générateur de gaz (2, 20) dans le coussin gonflable, d'un générateur de gaz (2, 20) et d'un support de générateur de gaz (3, 30),
- introduction du générateur de gaz (2, 20) dans l'ouverture de générateur de gaz (11, 110) et
- disposition du générateur de gaz (2, 20) de telle manière par rapport au support de générateur de gaz (3, 30) qu'en cas de déclenchement, le coussin gonflable (1, 10) presse le générateur de gaz (2, 20) contre le support de générateur de gaz (3, 30),
- le coussin gonflable (1, 10) non gonflé est tiré à travers une ouverture (31, 310) du support de générateur de gaz (3, 30) de telle manière qu'une première zone (12) du coussin gonflable (1, 10) qui ne comporte pas le générateur de gaz (2, 20) se trouve sur l'un côté de l'ouverture (31, 310) et une seconde zone (13) du coussin gonflable (1, 10) qui comporte le générateur de gaz (2, 20) se trouve de l'autre côté de l'ouverture (31, 310).

13. Procédé selon la revendication 12, **caractérisé en ce que** le générateur de gaz (2, 20) est réalisé et disposé de telle manière que du gaz sortant du générateur de gaz (2, 20) remplisse au moins principalement la première zone du coussin gonflable (1, 10).

14. Procédé selon la revendication 12 ou 13, **caractérisé en ce que** le coussin gonflable (1, 10) est disposé par rapport au générateur de gaz (2, 20) et au support du générateur de gaz (3, 30) de telle manière qu'en cas de déclenchement, l'ouverture de générateur de gaz (11, 110) soit fermée de manière étanche au gaz par la traction du générateur de gaz (2, 20) sur le support de générateur de gaz (3, 30).
